# EUROPÄISCHE PATENTSCHRIFT

(11) **EP 4 276 319 B1**
(45) Veröffentlichungstag und Bekanntmachung des Hinweises auf die Patenterteilung: **16.09.2026**
(21) Anmeldenummer: 23155501.2
(22) Anmeldetag: 08.02.2023
(51) Int. Cl.: F16B 15/08, B25C 1/00, F16B 15/00

(54) **NAGEL, INSBESONDERE FÜR DEN EINSATZ IN EINEM NAGELSETZGERÄT**
NAIL, IN PARTICULAR FOR USE IN A NAIL DRIVER
CLOU, EN PARTICULIER POUR L'UTILISATION DANS UN OUTIL DE COUPE DE CLOUS

(30) Priorität: 13.05.2022 DE 202022102641 U
(43) Veröffentlichungstag der Anmeldung: 15.11.2023
(73) Patentinhaber: Beck Fastening GmbH, 5270 Mauerkirchen (AT)
(72) Erfinder: Hochtritt, Thomas, 84489 Burghausen (DE)
(74) Vertreter: Paul & Albrecht Patentanwälte PartG mbB

(56) Entgegenhaltungen:
- DE-A1- 102018 121 065
- JP-U- 3 098 368
- US-A1- 2007 107 199
- US-A1- 2020 332 817
- US-A1- 2022 145 920

## Beschreibung

Die vorliegende Erfindung betrifft einen Nagel, insbesondere für den Einsatz in einem Nagelsetzgerät, der aus einem ausschließlich oder überwiegend lignozellulosischen Material besteht und einen Nagelschaft, der eine Nagelachse definiert, und eine am vorderen Ende des Nagelschafts angeordnete Nagelspitze aufweist, wobei der Nagelschaft und die Nagelspitze einen kreisrunden Querschnitt besitzen.

Nägel sind seit langer Zeit als Verbindungsmittel bekannt. Sie werden überwiegend aus Metall hergestellt, beispielsweise aus Stahl, Aluminium, Kupfer oder dergleichen. Metallnägel sind jedoch mit Nachteilen behaftet. So neigen Stahlnägel trotz Korrosionsschutzmaßnahmen wie z.B. Verzinken unter ungünstigen Bedingungen zum Rosten, und zwar insbesondere dann, wenn in dem genagelten Werkstoff saure Bedingungen herrschen. Dies gilt vor allem für gerbstoffreiche Hölzer, die wegen ihrer Dauerhaftigkeit im Außenbereich beispielsweise für Fassaden und Terrassen eingesetzt werden. Bei Bewitterung können unerwünschte dunkle bis schwarze Verfärbungen an den Nagelstellen entstehen. Eine Abhilfe durch Verwendung rostfreier Stahlsorten ist möglich aber sehr kostenaufwendig. Ein weiterer Nachteil besteht darin, dass sich das Recycling von mit Stahlnägeln durchsetzten Holzprodukten aufwendig gestaltet.

Aus diesem Grund werden alternativ Nägel aus überwiegend lignocellulosischen Materialien eingesetzt, wie beispielsweise Holz oder verholztem Pflanzenmaterial in Form von Bambus oder dergleichen. Lange Zeit konnten solche Holznägel nur dann verwendet werden, wenn der zu nagelnde Untergrund zuvor mit einem Loch versehen wurde, in welches dann der Nagel getrieben wurde. Neuere Entwicklungen ermöglichen es jedoch, Holznägel mit Hilfe von Nagelsetzgeräten wie beispielsweise Druckluftnaglern direkt in Holz einzuschießen, ohne das Holzmaterial vorzubohren. Zu verweisen ist insbesondere auf die WO 2016/180900 A1 der Anmelderin, aus der ein Nagelstreifen zum Einsatz in einem Nagelsetzgerät bekannt ist, dessen aus einem Nagelschaft und einer Nagelspitze bestehenden Nägel aus Holz oder Holzwerkstoffen bestehen und durch Verbindungsmittel miteinander verbunden sind, welche beim Setzen der Nägel automatisch abgeschert werden. Ein weiterer Nagel, der einen Nagelschaft und eine Nagelspitze jeweils mit kreisrundem Querschnitt aufweist und unter anderem aus Holz bestehen kann, ist in der DE 10 2017 100748 A1 offenbart.

Weiteren Stand der Technik bilden die Druckschriften JP 3098368 U, DE 10 2018 121 065 A1, US 2022/145920 A1, US 2007/107199 A1 und US 2020/332817 A1. JP 3098368 U zeigt einen Holznagel und dessen Verwendung als Sargnagel.

Aufgabe der vorliegenden Erfindung ist es daher, einen Nagel der eingangs genannten Art zu schaffen, der verbesserte Eigenschaften aufweist.

Zur Lösung dieser Aufgabe schafft die vorliegende Erfindung einen Nagel gemäß Anspruch 1.

Die ersten und zweiten Durchmesser sind dabei über die zugehörigen Nagelschaftabschnitte bevorzugt konstant, so dass der vordere Nagelschaftabschnitt und der hintere Nagelschaftabschnitt jeweils einen einheitlichen Durchmesser aufweisen. Der wesentliche Vorteil des erfindungsgemäßen Nagels besteht darin, dass die Spaltwirkung, die mit dem Eintreiben des Nagels in ein Bauteil, insbesondere in ein hölzernes Bauteil einhergeht, Dank der Tatsache, dass der vordere Schaftabschnitt mit einem kleineren Durchmesser als der hintere Schaftabschnitt versehen ist, deutlich reduziert wird, weshalb Beschädigungen am Bauteil minimiert werden. Der größere Durchmesser des hinteren Nagelschaftabschnitts sorgt für die erforderliche Festigkeit.

Vorteilhaft entspricht der zweite Durchmesser dem 1,3- bis 1,5-fachen des ersten Durchmessers. Mit einem solchen Durchmesserverhältnis wurden sehr gute Ergebnisse erzielt.

Gemäß einer Ausgestaltung der vorliegenden Erfindung liegt der erste Durchmesser im Bereich von 2,4 bis 3,2 mm und der zweite Durchmesser im Bereich von 3,1 bis 3,9 mm. Diese Durchmesserbereiche haben sich bei einigen Anwendungsgebieten als sehr günstig erwiesen, insbesondere wenn der erfindungsgemäße Nagel als Sargnagel verwendet wird.

Bevorzugt weist der vordere Nagelschaftabschnitt eine geringere Länge als der hintere Nagelschaftabschnitt auf. Dies hat bei den meisten Anwendungsfällen, in denen zwei Bauteile miteinander verbunden werden, zur Folge, dass sich der hintere Nagelschaftabschnitt vollständig durch das äußere Bauteil und teilweise durch das innere Bauteil erstreckt, wenn der Nagel von außen nach innen eingetrieben wird. Entsprechend wird durch den hinteren Nagelschaftabschnitt auch innerhalb der zwischen den Bauteilen vorhandenen Fuge eine sehr hohe Scherfestigkeit gewährleistet.

Vorteilhaft entspricht die Länge des vorderen Nagelabschnitts zwischen 30% und 40% der Gesamtlänge des Nagels. Mit einer solchen Länge wurden sehr gute Ergebnisse erzielt.

Zwischen dem vorderen Nagelschaftabschnitt und dem hinteren Nagelschaftabschnitt ist erfindungsgemäß ein kegelstumpfförmiger Übergangsabschnitt vorgesehen, in dem der erste Durchmesser konisch in den zweiten Durchmesser übergeht, wobei der Öffnungswinkel des Übergangsabschnitts bevorzugt im Bereich zwischen 55 und 65° liegt, insbesondere 60° beträgt. Ein solcher Übergangsabschnitt erleichtert ein ordnungsgemäßes Eintreiben des Nagels.

Erfindungsgemäß ist ein am hinteren Ende des hinteren Nagelschaftabschnitts angeordneter, gegenüber dem Nagelschaft verbreitert ausgebildeten Nagelkopf vorgesehen. Ein solcher Nagelkopf erhöht in erster Linie die Durchzugsfestigkeit.

Der Nagelkopf weist zur Vereinfachung der Herstellung erfindungsgemäß einen kreisrunden Querschnitt mit einem dritten Durchmesser aufweist, der dem 1,1 bis 1,3-fachen des zweiten Durchmessers entspricht, insbesondere dem 1,2-fachen.

Zwischen dem hinteren Nagelschaftabschnitt und dem Nagelkopf ist erfindungsgemäß ein kegelstumpfförmiger Übergangsbereich vorgesehen, in dem der zweite Durchmesser konisch in den dritten Durchmesser übergeht, wobei der Öffnungswinkel des Übergangsbereichs bevorzugt im Bereich zwischen 55 und 65° liegt, insbesondere 60° beträgt. Ein solcher Übergangsbereich verbessert die Durchzugsfestigkeit.

Zur weiteren Unterstützung der Durchzugsfestigkeit ist vorgesehen, dass der Übergangsbereich unmittelbar an der vorderen Stirnfläche, insbesondere der vorderen äußeren Umfangskante des Nagelkopfes beginnt.

Bevorzugt weist der Nagel eine Gesamtlänge von wenigstens 30 mm und/oder von maximal 60 mm, insbesondere von maximal 50 mm auf und die Gesamtlänge beträgt bevorzugt 40 mm.

Der Spitzenwinkel der Nagelspitze liegt bevorzugt im Bereich von 60 bis 120° und beträgt insbesondere 90° ± 3°.

Gemäß einer Ausführungsform der vorliegenden Erfindung ist vorgesehen, dass der Nagel aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignocellulosische Faser enthält, hergestellt ist.

Der organisch gebundene Holzwerkstoff enthält bevorzugt Melamin oder Phenolharz als Kunstharz, was dem Nagel eine besonders gute Stabilität verleiht.

Der organisch gebundene Holzwerkstoff enthält Kunstharz vorteilhaft in einer Menge von wenigstens 10 Gew%, insbesondere wenigstens 15 Gew%, wobei der Kunstharzanteil bevorzugt 20 Gew% beträgt.

Gemäß einer Ausgestaltung der vorliegenden Erfindung besteht der Nagel aus einem Material mit einer Dichte größer 0,65 g/cm³, insbesondere einer Dichte größer 0,85 g/cm³, bevorzugt einer Dichte größer 1,0 g/cm³ oder einer Dichte größer 1,1 g/cm³.

Ferner schafft die vorliegende Erfindung einen Nagelstreifen umfassend eine Mehrzahl von erfindungsgemäßen Nägeln. Ein solcher Nagelstreifen lässt sich in einem Nagelsetzgerät verwenden, insbesondere in Druckluftnaglern.

Schließlich schlägt die vorliegende Erfindung vor, einen erfindungsgemäßen Nagel als Sargnagel zu verwenden.

Weitere Merkmale und Vorteile der Erfindung werden anhand der nachfolgenden Beschreibung einer Ausführungsform eines erfindungsgemäßen Nagels unter Bezugnahme auf die beiliegende Zeichnung beschrieben. In der Zeichnung zeigt
- Figur 1: eine perspektivische Ansicht eines Nagels gemäß einer Ausführungsform der vorliegenden Erfindung und
- Figur 2: eine Seitenansicht des in Figur 1 dargestellten Nagels.

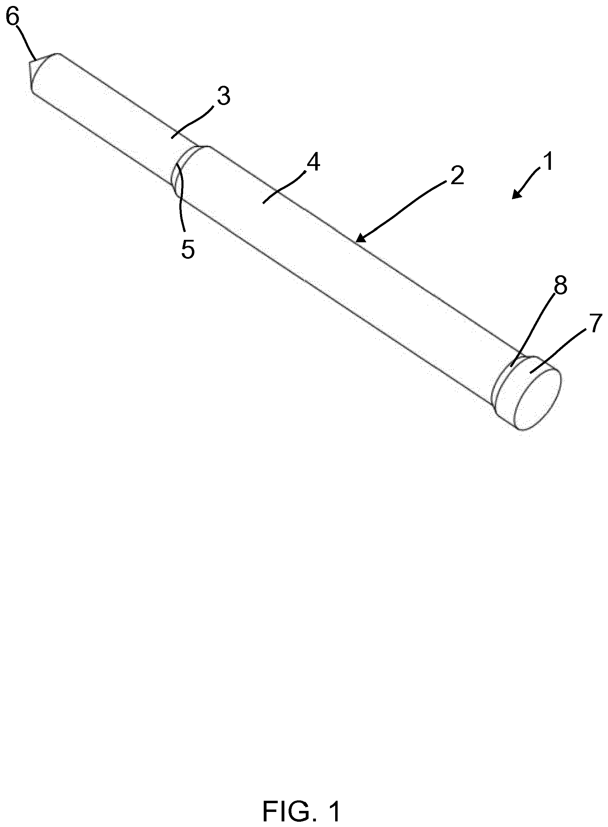

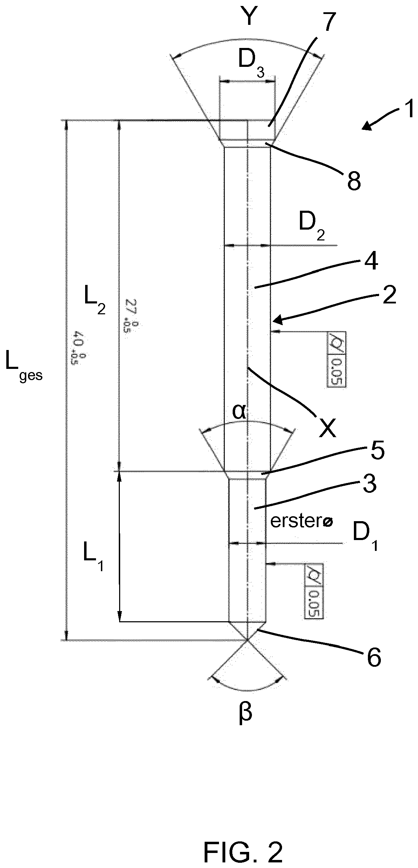

Die Figuren 1 und 2 zeigen eine Ausführungsform eines Nagels 1 der vorliegenden Erfindung. Der Nagel 1 besteht aus einem überwiegend lignocellulosischen Material mit einer Dichte von mehr als 1,1 g/cm³. Bei dem lignocellulosischen Material handelt es sich vorliegend um einen organisch gebundenen Holzwerkstoff in Form eines kunstharzgebundenen Schichtholzes, das eine Vielzahl von Schichten aufweist. Alternativ kann es sich bei dem lignocellulosischen Material aber auch um einen mit Kunstharz gebundenen Faserverbundwerkstoff handeln, der lignocellulosische Fasern enthält. Der organisch gebundene Holzwerkstoff enthält bei dieser Ausführungsform Kunstharz in einer Menge von mehr als 15 Gew%. Der Kunstharzanteil beträgt vorliegend etwa 20 Gew%.

Der Nagel 1 umfasst einen Nagelschaft 2, der eine Nagelachse X definiert und in einen vorderen Nagelschaftabschnitt 3 und in einen hinteren Nagelschaftabschnitt 4 unterteilt ist, die über einen Übergangsabschnitt 5 miteinander verbunden sind, eine am vorderen Ende des vorderen Nagelschaftabschnitts 3 angeordnete Nagelspitze 6 und einen am hinteren Ende des hinteren Nagelschaftabschnitts 4 angeordneten, gegenüber diesem verbreitert ausgebildeten Nagelkopf 7, wobei sich zwischen dem hinteren Nagelschaftabschnitt 4 und dem Nagelkopf 7 ein sich zum Nagelkopf 7 aufweitender Übergangsbereich 8 erstreckt. Der Nagelschaft 2, die Nagelspitze 6, der Nagelkopf 7 und der Übergangsbereich 8 weisen jeweils einen kreisrunden Querschnitt auf und sind einteilig ausgebildet.

Der vordere Nagelschaftabschnitt 3 weist einen ersten Durchmesser D₁ und der hintere Nagelschaftabschnitt 4 einen zweiten Durchmesser D₂ auf, wobei der zweite Durchmesser D₂ größer als der erste Durchmesser D₁ ist. Der zweite Durchmesser D₂ entspricht bevorzugt dem 1,3- bis 1,5-fachen des ersten Durchmessers D₁, wobei der erste Durchmesser D₁ insbesondere im Bereich von 2,4 bis 3,2 mm und der zweite Durchmesser D₂ im Bereich von 3,1 bis 3,9 mm liegt. Vorliegend beträgt der erste Durchmesser D₁ 2,8 mm und der zweite Durchmesser D₂ 3,5 mm. Die Länge L₁ des vorderen Nagelschaftabschnitts 3 ist geringer als die Länge L₂ des hinteren Nagelschaftabschnitts 4. Insbesondere entspricht die Länge L₁ des vorderen Nagelabschnitts 3 zwischen 30% und 40% der Gesamtlänge L_{ges} des Nagels 1, wobei die Gesamtlänge L_{ges} bevorzugt zwischen 30 und 60 mm liegt und vorliegend 40mm beträgt. Der Übergangsabschnitt 5, in dem der erste Durchmesser D₁ konisch in den zweiten Durchmesser D₂ übergeht, ist kegelstumpfförmig ausgebildet, wobei der Öffnungswinkel αdes Übergangsabschnitts bevorzugt im Bereich zwischen 55 und 65° liegt und vorliegend 60° ± 3° beträgt.

Die Nagelspitze 6 ist kegelförmig ausgebildet und besitzt einen Spitzenwinkel β, der im Bereich von 60° und 120° liegt und in dem dargestellten Ausführungsbeispiel 90° ± 3° beträgt. Alternativ könnte auch eine ballistische ausgebildete Nagelspitze 6 vorgesehen sein, deren Spitzenwinkel zwischen dem vorderen Ende der Nagelspitze 3 und dem hinteren Ende der Nagelspitze 6 am Übergang zum Nagelschaft 2 gemessen wird. Die Nagelspitze 6 ist hierbei bevorzugt spitz zulaufend ausgebildet, kann aber auch abgerundet sein.

Der Nagelkopf 7 ist vorliegend zylindrisch ausgebildet und besitzt in der Nagellängsrichtung eine Länge von insbesondere 0,8 bis 2,5 mm, hier von 1,5 mm. Der Nagelkopf 7 hat einen kreisrunden Querschnitt mit einem dritten Durchmesser D₃, der dem 1,1 bis 1,3-fachen des zweiten Durchmessers D₂ entspricht, insbesondere dem 1,2-fachen, und vorliegend 4,2 mm beträgt. Der Übergangsbereich 8 zwischen dem hinteren Nagelschaftabschnitt 4 und dem Nagelkopf 7 ist vorliegend kegelstumpfförmig ausgebildet und erweitert sich vom hinteren Nagelschaftabschnitt 4 zum Nagelkopf 7 hin. Die Außenfläche des Übergangsbereiches 8. beginnt unmittelbar an der vorderen äußeren Umfangskante des Nagelkopfes 4 und geht stetig in den Nagelschaft 2 über. Der Öffnungswinkel γdes Übergangsabschnitts liegt bevorzugt im Bereich zwischen 55 und 65° und beträgt vorliegend 60° ± 3°.

Die erfindungsgemäßen Nägel 1 können aus einem Vollmaterial, insbesondere einem Stangenmaterial durch Drehen oder Drechseln hergestellt werden.

### Bezugsziffernliste

- 1: Nagel
- 2: Nagelschaft
- 3: vorderer Nagelschaftabschnitt
- 4: hinterer Nagelschaftabschnitt
- 5: Übergangsabschnitt
- 6: Nagelspitze
- 7: Nagelkopf
- 8: Übergangsbereich
- α: Öffnungswinkel
- β: Spitzenwinkel
- γ: Öffnungswinkel

## Patentansprüche

1. Nagel (1), insbesondere für den Einsatz in einem Nagelsetzgerät, der aus einem ausschließlich oder überwiegend lignozellulosischen Material besteht und einen Nagelschaft (2), der eine Nagelachse (X) definiert, und eine am vorderen Ende des Nagelschafts (2) angeordnete Nagelspitze (6) aufweist, wobei der Nagelschaft (2) und die Nagelspitze (6) einen kreisrunden Querschnitt besitzen, wobei der Nagelschaft (2) einen vorderen, einen ersten Durchmesser (D₁) aufweisenden Nagelschaftabschnitt (3) und einen hinteren, einen zweiten Durchmesser (D₂) aufweisenden Nagelschaftabschnitt (4) umfasst, wobei der zweite Durchmesser (D₂) größer als der erste Durchmesser (D₁) ist, wobei die Nagelspitze (6) am vorderen Ende des vorderen Nagelschaftabschnitts (3) angeordnet ist, wobei ein am hinteren Ende des hinteren Nagelschaftabschnitts (4) angeordneter, gegenüber dem Nagelschaft (2) verbreitert ausgebildeter Nagelkopf (7) vorgesehen ist, wobei der Nagelkopf (7) einen kreisrunden Querschnitt mit einem dritten Durchmesser (D₃) aufweist, der dem 1,1 bis 1,3-fachen des zweiten Durchmessers (D₂) entspricht, wobei zwischen dem vorderen Nagelschaftabschnitt (3) und dem hinteren Nagelschaftabschnitt (4) ein kegelstumpfförmiger Übergangsabschnitt (5) vorgesehen ist, in dem der erste Durchmesser (D₁) konisch in den zweiten Durchmesser (D₂) übergeht, und wobei zwischen dem hinteren Nagelschaftabschnitt (4) und dem Nagelkopf (7) ein kegelstumpfförmiger Übergangsbereich (8) vorgesehen ist, in dem der zweite Durchmesser (D₂) konisch in den dritten Durchmesser (D₃) übergeht.

2. Nagel (1) nach Anspruch 1, **dadurch gekennzeichnet, dass** der zweite Durchmesser (D₂) dem 1,3- bis 1,5-fachen des ersten Durchmessers (D₁) entspricht.

3. Nagel (1) nach einem der vorhergehenden Ansprüche, **dadurch gekennzeichnet, dass** der erste Durchmesser (D₁) im Bereich von 2,4 bis 3,2 mm und der zweite Durchmesser (D₂) im Bereich von 3,1 bis 3,9 mm liegt.

4. Nagel (1) nach einem der vorhergehenden Ansprüche, **dadurch gekennzeichnet, dass** der vordere Nagelschaftabschnitt (3) eine geringere Länge (L₁) als der hintere Nagelschaftabschnitt (4) aufweist.

5. Nagel (1) nach Anspruch 4, **dadurch gekennzeichnet, dass** die Länge (L₁) des vorderen Nagelabschnitts (3) zwischen 30% und 40% der Gesamtlänge (L_{ges}) des Nagels (1) entspricht.

6. Nagel (1) nach einem der vorhergehenden Ansprüche, **dadurch gekennzeichnet, dass** der Öffnungswinkel (α) des Übergangsabschnitts (5) zwischen dem vorderen Nagelschaftabschnitt (3) und dem hinteren Nagelschaftabschnitt (4) im Bereich zwischen 55 und 65° liegt, insbesondere 60° beträgt.

7. Nagel (1) nach einem der vorhergehenden Ansprüche, **dadurch gekennzeichnet, dass** der Öffnungswinkel (γ) des Übergangsbereichs (8) zwischen dem hinteren Nagelschaftabschnitt (4) und dem Nagelkopf (7) im Bereich zwischen 55 und 65° liegt, insbesondere 60° beträgt.

8. Nagel (1) nach einem der vorhergehenden Ansprüche, **dadurch gekennzeichnet, dass** der Übergangsbereich (8) unmittelbar an der vorderen Stirnfläche, insbesondere der vorderen äußeren Umfangskante des Nagelkopfes (7) beginnt.

9. Nagel (1) nach einem der vorhergehenden Ansprüche, **dadurch gekennzeichnet, dass** der Nagel (1) eine Gesamtlänge (L_{ges}) von wenigstens 30 mm und/oder von maximal 60 mm, insbesondere von maximal 50 mm aufweist und die Gesamtlänge (L_{ges}) bevorzugt 40 mm beträgt und/oder dass der Spitzenwinkel (β) der Nagelspitze (3) im Bereich von 60 bis 120° liegt und insbesondere 90° ± 3° beträgt.

10. Nagel (1) nach einem der vorherigen Ansprüche, **dadurch gekennzeichnet, dass** dieser aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignozellulosische Faser enthält, hergestellt ist, wobei der organisch gebundene Werkstoff insbesondere Melamin oder Phenolharz als Kunstharz enthält und/oder der organisch gebundene Holzwerkstoff Kunstharz insbesondere in einer Menge von wenigstens 10 Gew%, insbesondere von wenigstens 15 Gew% enthält, wobei der Kunstharzanteil bevorzugt 20 Gew% beträgt,
und/oder dass diese aus einem Material mit einer Dichte größer 0,65 g/cm³, insbesondere einer Dichte größer 0,85 g/cm³, bevorzugt einer Dichte größer 1,0 g/cm³ oder einer Dichte größer 1,1 g/cm³ besteht.

11. Nagelstreifen umfassend eine Mehrzahl von Nägeln (1) nach einem der vorherigen Ansprüche.

12. Verwendung eines Nagels (1) nach einem der Ansprüche 1 bis 10 als Sargnagel.

## Claims

1. A nail (1), in particular for use in a nail gun, consisting exclusively or predominantly of a lignocellulosic material and comprising a nail shank (2), which defines a nail axis (X), and a nail tip (6) located at the front end of the nail shank (2), wherein the nail shank (2) and the nail tip (6) have a circular cross-section, wherein the nail shank (2) comprises a front nail shank section (3) having a first diameter (D₁) and a rear nail shaft section (4) having a second diameter (D₂), wherein the second diameter (D₂) is greater than the first diameter (D₁), wherein the nail tip (6) is located at the front end of the front nail shaft section (3), wherein a nail head (7) is provided at the rear end of the rear nail shaft section (4), which is widened relative to the nail shaft (2), wherein the nail head (7) has a circular cross-section with a third diameter (D₃) that corresponds to 1.1 to 1.3 times the second diameter (D₂), wherein a truncated conical transition section (5) is provided between the front nail shaft section (3) and the rear nail shaft section (4), in which the first diameter (D₁) tapers conically into the second diameter (D₂), and wherein a truncated conical transition region (8) is provided between the rear nail shaft section (4) and the nail head (7), in which the second diameter (D₂) tapers conically into the third diameter (D₃).

2. A nail (1) according to claim 1, **characterized in that** the second diameter (D₂) corresponds to 1.3 to 1.5 times the first diameter (D₁).

3. A nail (1) according to any one of the preceding claims, **characterized in that** the first diameter (D₁) is in the range of 2.4 to 3.2 mm and the second diameter (D₂) is in the range of 3.1 to 3.9 mm.

4. A nail (1) according to any of the preceding claims, **characterized in that** the front nail shaft section (3) has a shorter length (L₁) than the rear nail shaft section (4).

5. A nail (1) according to claim 4, **characterized in that** the length (L₁) of the front nail section (3) corresponds to between 30% and 40% of the total length (L_{ges}) of the nail (1).

6. A nail (1) according to any one of the preceding claims, **characterized in that** the opening angle (α) of the transition section (5) between the front nail shank section (3) and the rear nail shank section (4) lies in the range between 55 and 65°, in particular 60°.

7. A nail (1) according to any one of the preceding claims, **characterized in that** the opening angle (γ) of the transition region (8) between the rear nail shank section (4) and the nail head (7) lies in the range between 55 and 65°, in particular 60°.

8. A nail (1) according to one of the preceding claims, **characterized in that** the transition region (8) begins immediately at the front end face, in particular at the front outer peripheral edge of the nail head (7).

9. A nail (1) according to any of the preceding claims, **characterized in that** the nail (1) has a total length (L_{ges}) of at least 30 mm and/or a maximum of 60 mm, in particular a maximum of 50 mm, and the total length (L_{ges}) is preferably 40 mm, and/or that the tip angle (β) of the nail tip (3) lies in the range from 60 to 120° and is, in particular, 90° ± 3°.

10. A nail (1) according to any one of the preceding claims, **characterized in that** it is made of wood and/or a wood-based material, in particular an organically bonded wood-based material, preferably a synthetic resin-bonded laminated wood or a synthetic resin-bonded fiber composite material containing lignocellulosic fibers, wherein the organically bonded material contains, in particular, melamine or phenolic resin as the synthetic resin, and/or the organically bonded wood-based material contains synthetic resin, in particular in an amount of at least 10 wt%, in particular at least 15 wt%, wherein the synthetic resin content is preferably 20 wt%,
and/or that it consists of a material having a density greater than 0.65 g/cm³, in particular a density greater than 0.85 g/cm³, preferably a density greater than 1.0 g/cm³,or a density greater than 1.1 g/cm³.

11. Nail strips comprising a plurality of nails (1) according to one of the preceding claims.

12. Use of a nail (1) according to any one of claims 1 through 10 as a coffin nail.

## Revendications

1. Clou (1), destiné notamment à être utilisé dans une cloueuse, constitué d'un matériau exclusivement ou principalement lignocellulosique et comportant une tige de clou (2), qui définit un axe (X) du clou, et une pointe (6) disposée à l'extrémité avant de la tige (2) du clou, la tige (2) du clou et la pointe (6) présentant une section transversale circulaire, la tige (2) du clou comprenant une partie avant (3) présentant un premier diamètre (D₁) et une partie arrière de tige de clou (4) présentant un deuxième diamètre (D₂), le deuxième diamètre (D₂) étant supérieur au premier diamètre (D₁), la pointe de clou (6) étant disposée à l'extrémité avant de la partie avant de la tige (3), une tête de clou (7) étant prévue à l'extrémité arrière de la partie arrière de la tige (4), laquelle tête de clou (7) est élargie par rapport à la tige (2), la tête de clou (7) présentant une section transversale circulaire avec un troisième diamètre (D₃) correspondant à 1,1 à 1,3 fois le deuxième diamètre (D₂), une partie de transition tronconique (5) étant prévue entre la partie avant de la tige du clou (3) et la partie arrière de la tige du clou (4), dans laquelle le premier diamètre (D₁) se raccorde de manière conique au deuxième diamètre (D₂), et dans laquelle une zone de transition tronconique (8) est prévue entre la partie arrière de la tige du clou (4) et la tête du clou (7), dans laquelle le deuxième diamètre (D₂) se raccorde de manière conique au troisième diamètre (D₃).

2. Clou (1) selon la revendication 1, **caractérisé en ce que** le deuxième diamètre (D₂) correspond à 1,3 à 1,5 fois le premier diamètre (D₁).

3. Clou (1) selon l'une des revendications précédentes, **caractérisé en ce que** le premier diamètre (D₁) est compris entre 2,4 et 3,2 mm et le deuxième diamètre (D₂) entre 3,1 et 3,9 mm.

4. Clou (1) selon l'une des revendications précédentes, **caractérisé en ce que** la partie avant de la tige du clou (3) présente une longueur (L₁) inférieure à celle de la partie arrière de la tige du clou (4).

5. Clou (1) selon la revendication 4, **caractérisé en ce que** la longueur (L₁) de la partie avant (3) du clou correspond à une valeur comprise entre 30 % et 40 % de la longueur totale (Lₜₒₜ) du clou (1).

6. Clou (1) selon l'une des revendications précédentes, **caractérisé en ce que** l'angle d'ouverture (α) de la partie de transition (5) entre la partie avant de la tige du clou (3) et la partie arrière de la tige du clou (4) se situe dans une plage comprise entre 55 et 65°, en particulier à 60°.

7. Clou (1) selon l'une des revendications précédentes, **caractérisé en ce que** l'angle d'ouverture (γ) de la zone de transition (8) entre la partie arrière de la tige du clou (4) et la tête du clou (7) est compris entre 55 et 65°, en particulier 60°.

8. Clou (1) selon l'une des revendications précédentes, **caractérisé en ce que** la zone de transition (8) commence immédiatement au niveau de la face frontale avant, en particulier au niveau du bord périphérique extérieur avant de la tête de clou (7).

9. Clou (1) selon l'une des revendications précédentes, **caractérisé en ce que** le clou (1) présente une longueur totale (Lₜₒₜ) d'au moins 30 mm et/ou d'au plus 60 mm, en particulier d'au plus 50 mm, et que la longueur totale (Lₜₒₜ) est de préférence de 40 mm, et/ou **en ce que** l'angle de pointe (β) de la pointe du clou (3) est compris entre 60 et 120° et est en particulier de 90° ± 3°.

10. Clou (1) selon l'une des revendications précédentes, **caractérisé en ce qu'**il est fabriqué en bois et/ou en un matériau à base de bois, en particulier un matériau à base de bois à liant organique, de préférence un bois stratifié lié par une résine synthétique ou un matériau composite à fibres lié par une résine synthétique, qui contient des fibres lignocellulosiques, le matériau à liant organique contenant notamment de la mélamine ou de la résine phénolique en tant que résine synthétique et/ou le matériau à base de bois à liant organique contenant de la résine synthétique notamment en une quantité d'au moins 10 % en poids, notamment d'au moins 15 % en poids, la teneur en résine synthétique s'élevant de préférence à 20 % en poids,
et/ou **en ce qu'**il est constitué d'un matériau présentant une densité supérieure à 0,65 g/cm³, en particulier supérieure à 0,85 g/cm³, de préférence supérieure à 1,0 g/cm³ou supérieure à 1,1 g/cm³.

11. Bande de clous comprenant une pluralité de clous (1) selon l'une des revendications précédentes.

12. Utilisation d'un clou (1) selon l'une des revendications 1 à 10 comme clou de cercueil.
